# EUROPÄISCHE PATENTANMELDUNG

(11) **EP 4 385 813 A1**
(43) Veröffentlichungstag der Anmeldung: **19.06.2024**
(21) Anmeldenummer: 23197064.1
(22) Anmeldetag: 13.09.2023
(51) Int. Cl.: B60N 2/22, B60N 2/66, B60N 2/02, B60N 2/24, B60N 2/68

(54) **FAHRZEUGSITZ ZUR GLEICHZEITIGEN EINSTELLUNG EINER SITZTIEFE UND EINER LENDENSTÜTZE**

(30) Priorität: 15.12.2022 DE 102022133443
(71) Anmelder: GRAMMER AG, 92289 Ursensollen (DE)
(72) Erfinder: Wegmann, Sebastian, 93059 Regensburg (DE); Neidl, Christopher, 92546 Schmidgaden (DE); Pöllinger, Thomas, 93059 Regensburg (DE)
(74) Vertreter: Hannke Bittner & Partner mbB Regensburg

(57) **Zusammenfassung**

Die Erfindung betrifft ein Fahrzeugsitz zur gleichzeitigen Einstellung einer Sitztiefe und einer Lendenstütze des Fahrzeugsitzes, wobei der Fahrzeugsitz einen Rückenlehnenrahmen, einen Sitzteilrahmen und einen Verbindungsrahmen umfasst, wobei der Verbindungsrahmen drehbar um eine erste Drehachse mit dem Rückenlehnenrahmen und drehbar um eine zweite Drehachse mit dem Sitzteilrahmen verbunden ist und den Sitzteilrahmen mit dem Rückenlehnenrahmen verbindet, wobei der Sitzteilrahmen und der Rückenlehnenrahmen mit einem Tragelement derart verbunden sind, dass der Sitzteilrahmen und der Rückenlehnenrahmen simultan relativ zu dem Tragelement verlagerbar sind.

## Beschreibung

Die vorliegende Patentanmeldung betrifft einen Fahrzeugsitz zur gleichzeitigen Einstellung einer Sitztiefe und einer Lendenstütze des Fahrzeugsitzes gemäß dem Oberbegriff des Patentanspruches 1.

Aus dem Stand der Technik ist beispielweise die DE 10 2014 118 061 A1 bekannt, welche eine Sitztiefeneinstellung und eine gleichzeitige Lordosen- beziehungsweise Kyphosenunterstützung des unteren Rückens zeigt. Dabei weist der Fahrzeugsitz ein Sitzteil auf, welches im hinteren Bereich ein Bügelelement angeordnet ist, welches bei einem nach vorne schieben des Sitzteils Federblechelemente deformiert und dahingehend die Unterstützung des Lendenbereichs des Rückens einer darauf sitzenden Person einstellt.

Dabei hat der gezeigte Fahrzeugsitz gemäß dem Stand der Technik aufgrund des Vorsehens von Federblechelementen den Nachteil, dass das Sitzteil dazu tendiert, wieder nach hinten verschoben zu werden, da es sich um eine elastische Verformung der Federblechelemente handelt. Ebenso ist eine konstruktiv aufwendige Ausgestaltung des Fahrzeugsitzes vorgesehen.

Es ist daher die Aufgabe der vorliegenden Anmeldung, einen Fahrzeugsitz zur gleichzeitigen Einstellung einer Sitztiefe und einer Lendenstütze anzugeben, welcher konstruktiv besonders einfach ausgestaltet ist und die Nachteile des Standes der Technik überkommt.

Gelöst wird die zugrunde liegende Aufgabe durch einen Fahrzeugsitz mit den Merkmalen des Patentanspruches 1.

Erfindungsgemäß ist es ein Kerngedanke der vorliegenden Anmeldung, einen Fahrzeugsitz zur gleichzeitigen Einstellung einer Sitztiefe und einer Lendenstütze des Fahrzeugsitzes bereitzustellen. Erfindungsgemäß ist es vorgesehen, dass der Fahrzeugsitz einen Rückenlehnenrahmen, einen Sitzteilrahmen und einen Verbindungsrahmen umfasst, wobei der Verbindungsrahmen drehbar um eine erste Drehachse mit dem Rückenlehnenrahmen umdrehbar um eine zweite Drehachse mit dem Sitzteilrahmen verbunden ist. Weiter soll es vorgesehen sein, dass der Verbindungsrahmen den Sitzteilrahmen mit dem Rückenlehnenrahmen verbindet, wobei es weiter vorgesehen sein soll, dass der Sitzteilrahmen und der Rückenlehnenrahmen mit einem Tragelement derart verbunden sind, dass der Sitzteilrahmen und der Rückenlehnenrahmen simultan relativ zu dem Tragelement verlagerbar sind.

Möchte eine Person, welche sich auf den Fahrzeugsitz niederlassen kann, die Sitztiefe einstellen, so kann die Person manuell das Sitzteil entweder nach vorne oder nach hinten verlagern, bis die korrekte Sitztiefe für die jeweilige Person eingestellt ist.

Bei Einstellung einer Sitztiefe ist es erfindungsgemäß vorgesehen, dass mit dem Sitzteilrahmen auch der Rückenlehnenrahmen hinsichtlich des Tragelements verlagert wird. Dementsprechend wird auch der Verbindungsrahmen, welcher zwischen dem Rückenlehnenrahmen und dem Sitzteilrahmen angeordnet ist, nämlich drehbar angeordnet ist, entsprechend mit dem Sitzteilrahmen verlagert und zieht bei einer Verlagerung des Sitzteilrahmens den Rückenlehnenrahmen entsprechend nach.

Durch die Zwangsführung des Verbindungsrahmens hinsichtlich des Sitzteilrahmens und des Rückenlehnenrahmens verändert sich die Lage beziehungsweise die Anordnung des Verbindungsrahmens im Raum, nämlich dahingehend, dass sich ein unterer Anteil des Verbindungsrahmes entsprechend mit dem Sitzteilrahmen nach vorne beziehungsweise nach hinten verlagert.

Durch die Veränderung der Lage des Verbindungsrahmens im Raum, wie vorhergehend dargestellt, ändert sich dadurch die Lendenstütze des Fahrzeugsitzes.

Der Verbindungsrahmen kann daher auch als Lendenstützenrahmen bezeichnet werden, welcher derart ausgebildet und angeordnet ist, dass der Verbindungsrahmen eine Stütze für den Lendenbereich einer Person darstellen kann.

Unter dem angegebenen Tragelement kann beispielweise verstanden werden, dass es sich hierbei um eine starre Sitzschale handeln kann, welche derart ausgebildet ist, dass der Sitzteilrahmen und der Rückenlehnenrahmen daran befestigt werden können, nämlich dahingehend, dass eine Verlagerung des Sitzteilrahmens und des Rückenlehnenrahmens hinsichtlich des Tragelements möglich ist.

Besonders bevorzugt ist das Tragelement ortsfest angeordnet, das heißt, insbesondere ortsfest gegenüber einer Kabine oder eines Wagons.

Gemäß einer besonders bevorzugten Ausführungsform ist es vorgesehen, dass die Verbindung des Sitzteilrahmens und des Rückenlehnenrahmens zu dem Tragelement derart ist, dass der Rückenlehnenrahmen und der Sitzteilrahmen jeweils ausschließlich translatorisch gegenüber dem Tragelement verlagerbar sind.

Das bedeutet, dass bei einer Verlagerung des Sitzteilrahmens nach vorne beziehungsweise nach hinten der Rückenlehnenrahmen entsprechend nach oben beziehungsweise nach unten bewegt werden kann. Durch die translatorische Verlagerung des Sitzteilrahmens und des Rückenlehnenrahmens ist daher eine Zwangsführung des Verbindungsrahmens vorgesehen und realisiert.

Hierdurch kann eine besonders gute Führung des Verbindungsrahmens erreicht werden, um präzise und möglichst einfach die Lendenstütze des Fahrzeugsitzes einzustellen.

Gemäß einer weiteren bevorzugten Ausführungsform kann es vorgesehen sein, dass der Sitzteilrahmen und der Rückenlehenrahmen einen festen und unveränderbaren Winkel zueinander einschließen. Dadurch kann es vorteilhaft möglich sein, dass der Winkel der Person zwischen dem oberen Bereich des Rückens und des Gesäßes unverändert bleibt, sodass eine weitere besonders vorteilhafte Anpassung im Lendenbereich des Rückens möglich ist.

Gemäß einer weiteren besonders bevorzugten Ausführungsform kann es vorgesehen sein, dass zwischen dem Sitzteilrahmen und dem Verbindungsrahmen ein erster veränderlicher Winkel und zwischen dem Rückenlehnenrahmen und dem Verbindungsrahmen ein zweiter veränderlicher Winkel vorgesehen ist.

Weiter bevorzugt ist es vorgesehen, dass sich die Größe der veränderlichen Winkel sich bei Verlagerung des Sitzteilrahmens verändern, wodurch die Lendenstütze beziehungsweise die Einstellung der Lendenstützung veränderlich ist.

Dadurch ist es möglich, dass durch die Anordnung des Verbindungsrahmens zu dem Sitzteilrahmen und dem Rückenlehnenrahmen eine gute Anpassung der Lende beziehungsweise der Lendenstütze möglich ist.

Gemäß einer weiteren bevorzugten Ausführungsform kann es vorgesehen sein, dass der Rückenlehnenrahmen und der Sitzteilrahmen mittels Führungseinrichtungen jeweils translatorisch verlagerbar sind. Weiter bevorzugt kann es vorgesehen sein, dass die Führungseinrichtungen zumindest eine Nutensteinführung sein können.

Für den Fall, dass die Führungseinrichtung eine Nutensteinführung ist, ist es besonders vorteilhaft vorgesehen, dass Nutensteinelemente und Nuten vorgesehen sind. Besonders vorteilhaft sind die Nutensteinelemente mit dem Tragelement verbunden und die Nuten in den Sitzteilrahmen und dem Rückenlehnrahmen integriert. Dies hat besonders dahingehend den Vorteil, dass bei der Montage des Fahrzeugsitzes die entsprechenden Rahmen eingehängt werden können.

Besonders vorteilhaft ist es vorgesehen, dass die Nutensteinelemente zumindest teilweise komplementär zu den Nuten ausgebildet sind, sodass die Nutensteinelemente in den Nuten führbar sind.

Besonders einfach und konstruktiv vorteilhaft kann die Führungseinrichtung ausgebildet sein, wenn eines der Nutensteinelemente bzw. jedes Nutensteinelement einen ersten Abschnitt, einen zweiten Abschnitt und einen dritten Abschnitt umfassen, wobei der erste Abschnitt oberhalb der Nute angeordnet ist und breiter als die Nute ausgebildet ist, und wobei der zweite Abschnitt sich an den ersten Abschnitt anschließt und sich durch die entsprechende Nut hindurch erstreckt und ein dritter Abschnitt unterhalb der Nut angeordnet ist und sich an den zweiten Abschnitt anschließt, wobei der dritte Abschnitt ebenso breiter als die Nut ausgebildet ist.

Das Nutensteinelement weist also bevorzugt eine Schichtstruktur auf, ausgebildet durch den ersten Abschnitt, den zweiten Abschnitt und den dritten Abschnitt, welche in einer Höhenrichtung übereinander angeordnet sind. Dadurch, dass bevorzugt der zweite Abschnitt in der Nut geführt werden kann und der erste Abschnitt und der dritte Abschnitt breiter als die Nut ausgebildet sind, kann ein Lösen des Nutensteins und der Nut verhindert werden.

Besonders bevorzugt weist die Nut beziehungsweise weisen die Nuten einen Montageabschnitt auf, welcher dazu ausgebildet und vorgesehen ist, dass der erste Abschnitt durch diesen Montageabschnitt geführt werden kann, sodass der zweite Abschnitt dann durch die Nut hindurchragen kann. Bevorzugt ist der Montageabschnitt derart dimensioniert, dass der erste Abschnitt hindurchgeführt werden kann.

Die Nut wird durch den ersten Abschnitt und den dritten Abschnitt gehalten, sodass ein Herausfallen des Nutensteins aus der Nut gut verhindert werden kann.

Besonders bevorzugt ist die Position des Montageabschnitts beziehungsweise die Verlagerung des Sitzteils derart, dass in einem zusammengebauten Zustand des Fahrzeugsitzes, das heißt, dass das Sitzteil am Sitzteilrahmen montiert ist, der Nutenstein nicht bis in den Montageabschnitt geführt werden kann, um ein Herausfallen des Nutensteins aus der Nut verhindern zu können.

Gemäß einer weiteren bevorzugten Ausführungsform kann es vorgesehen sein, dass der Rückenlehnenrahmen und der Verbindungsrahmen mit einem ersten Polsterelement und der Sitzteilrahmen mit einem zweiten Polsterelement verbunden sind. Besonders bevorzugt ist es vorgesehen, dass das erste Polsterelement unabhängig von dem zweiten Polsterelement ist. Das heißt, dass das erst Polsterelement und das zweiter Polsterelement separate Elemente darstellen und nicht miteinander verbunden sind.

Dadurch, dass die Polsterelemente voneinander unabhängig sind, bedeutet dies, dass eine Deformation des Polsterelements durch die Verlagerung des Sitzteilrahmens und der entsprechenden Verlagerung des Rückenlehnenrahmens und des Verbindungsrahmens reduziert werden kann, sodass die Lebensdauer und die Nutzbarkeit der Polsterelemente insgesamt erhöht werden kann. Ebenso kann insbesondere das erste Polsterelement sich besser an die Gegebenheiten und der Position des Verbindungsrahmens anpassen.

Ebenso kann durch die Unabhängigkeit der Polsterelemente die Montage des Fahrzeugsitzes erleichtert werden, da das Sitzteil mit dem Sitzteilrahmen unabhängig von dem Rückenlehnenrahmen montiert werden kann und bei der Montage dann durch die Verbindung zwischen dem Sitzteilrahmen und dem Verbindungsrahmen eine Verbindung leicht hergestellt werden kann. Gemäß einer weiteren bevorzugten Ausführungsform kann es vorgesehen sein, dass zur verbesserten Montage zwischen dem Sitzteilrahmen und dem Verbindungsrahmen eine lösbare Verbindung steht. Weiter bevorzugt handelt es sich bei der lösbaren Verbindung bevorzugt um eine Clip-Verbindung.

Besonders bevorzugt gemäß einer weiteren bevorzugten Ausführungsform kann es vorgesehen sein, dass die lösbare Verbindung ein Hülsenelement und ein in das Hülsenelement einbringbares Wellenstück umfasst. Das Hülsenelement kann bevorzugt derart ausgebildet sein, dass in einem Querschnitt das Hülsenelement einen Kreissektor darstellt mit einem Mittelpunktswinkel von mehr als 180° und höchstens 300°. Weiter bevorzugt kann es vorgesehen sein, dass das Wellenstück zumindest teilweise komplementär zu dem Hülsenelement ausgebildet ist und in das Hülsenelement eingebracht werden kann.

Zumindest teilweise komplementär bezieht sich hierbei insbesondere auf einen inneren Bereich des Hülsenelements. Das Hülsenelement weist insbesondere eine äußere und eine innere Begrenzung auf, wobei die innere Begrenzung das Innere des Hülsenelements ausbildet.

Besonders bevorzugt ist das Hülsenelement aus einem elastisch deformierbaren Material ausgebildet, sodass das Wellenstück leicht in das Hülsenelement eingebracht werden kann, da das Wellenstück zum Inneren des Hülsenelements komplementär ausgebildet ist und daher die Öffnung des Hülsenelements leicht erweitert werden muss, um das Wellenstück in das Hülsenelement einclipsen zu können.

Weiterführende Ausgestaltungen und Ausbildungen in den Ausführungsformen untereinander sind auf die weiteren Ausführungen anwendbar und sind untereinander frei kombinierbar, sofern sie nicht gegenläufigen Ausführungsformen entsprechen.

Weitere vorteilhafte Ausführungsformen ergeben sich aus den Unteransprüchen.

Weitere Ziele, Vorteile und Zweckmäßigkeiten der vorliegenden Erfindung sind der nachfolgenden Beschreibung in Verbindung mit den Zeichnungen zu entnehmen.

Die Erfindung wird nachfolgend in Zusammenhang mit den Figuren näher dargestellt.
- Fig. 1A: Fahrzeugsitz gemäß einer Ausführungsform in einer Grundstellung;
- Fig. 1B: Fahrzeugsitz der Figur 1A in einer verlagerten Stellung;
- Fig. 1C: Fahrzeugsitz der Figur 1A mit Polsterelementen;
- Fig. 1D: Fahrzeugsitz nach Figur 1C in einer Seitenansicht;
- Fig. 2A: Fahrzeugsitz gemäß Figur 1D in der Grundstellung;
- Fig. 2B: Fahrzeugsitz gemäß Figur 2A in einer Schnittdarstellung;
- Fig. 3A: Fahrzeugsitz gemäß Figur 1D in einer ersten verlagerten Stellung;
- Fig. 3B: Fahrzeugsitz gemäß Figur 3A in einer Schnittdarstellung;
- Fig. 4A: Fahrzeugsitz gemäß Figur 1D in einer zweiten verlagerten Stellung;
- Fig. 4B: Fahrzeugsitz gemäß Figur 4A in einer Schnittdarstellung;
- Fig. 5A: Fahrzeugsitz gemäß Figur 1D in einer dritten verlagerten Stellung;
- Fig. 5B: Fahrzeugsitz gemäß Figur 5A in einer Schnittdarstellung;
- Fig. 6A: Fahrzeugsitz gemäß Figur 1D in einer vierten verlagerten Stellung;
- Fig. 6B: Fahrzeugsitz gemäß Figur 6A in einer Schnittdarstellung;
- Fig. 7A: Fahrzeugsitz gemäß Figur 1D in einer maximal verlagerten Stellung;
- Fig. 7B: Fahrzeugsitz gemäß Figur 7A in einer Schnittdarstellung;

In den Figuren sind gleiche Bauteile jeweils mit den entsprechenden Bezugszeichen zu verstehen. Zur besseren Übersichtlichkeit können in manchen Figuren Bauteile nicht mit einem Bezugszeichen versehen sein, die jedoch an anderer Stelle bezeichnet worden sind.

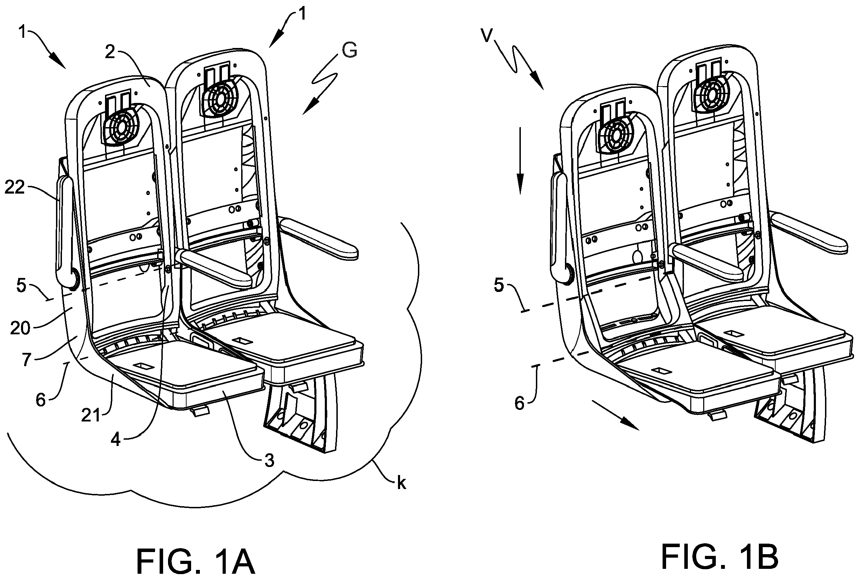

In der Figur 1a sind zwei Fahrzeugsitze 1, welche nebeneinander angeordnet sind, gezeigt. Die nachfolgenden Erläuterungen und Erklärungen gelten hinsichtlich jedes der Fahrzeugsitze 1. Wie zu erkennen ist, umfasst der Fahrzeugsitz 1 einen Rückenlehnenrahmen 2, einen Sitzteilrahmen 3 und einen Verbindungsrahmen 4. Dabei sind der Rückenlehnenrahmen 2 und der Verbindungsrahmen 4 drehbar um eine erste Drehachse 5 miteinander verbunden. Weiter ist der Verbindungsrahmen 4 mit dem Sitzteilrahmen 3 ebenfalls drehbar verbunden um eine zweite Drehachse 6.

Weiter ist ein Tragelement 7 dargestellt, welches hinsichtlich eines Fahrzeugs bzw. einer Kabine K ortsfest und starr damit verbunden ist. Der Rückenlehnenrahmen 2, der Sitzteilrahmen 3 und der Verbindungsrahmen 4 sind dabei mit dem Tragelement 7 verbunden. Die Verbindung zwischen den Rahmen 2, 3, 4 mit dem Tragelement 7 sind dabei derart, dass die Rahmen 2, 3, 4 gegenüber dem Tragelement 7 verlagerbar sind.

Bevorzugt weist das Tragelement 7 einen Rückenlehnenabschnitt 20 und einen Sitzteilabschnitt 21 auf, wobei der Rückenlehnenabschnitt mit dem Rückenlehnenrahmen 2 und der Sitzteilabschnitt 21 mit dem Sitzteilrahmen 3 verbindbar sind.

An dem Tragelement 7, insbesondere an dem Rückenlehnenabschnitt 20 kann eine oder mehrere Armlehnen 22 angeordnet werden.

Die Fahrzeugsitze 1 gemäß der Figur 1a sind in einer Grundstellung G dargestellt, das heißt, dass das Sitzteil in seiner Ausgangsposition vorliegt, also noch nicht nach vorne verlagert worden ist. Die Stellung, in welcher der Sitzteilrahmen 3 in seiner an der weitesten hinten angeordneten Stellung ist, wird als die Grundstellung G definiert.

In der Figur 1b ist nun einer der zwei der Fahrzeugsitze 1 in einer verlagerten Stellung V dargestellt, das heißt, dass das Sitzteil 3 beziehungsweise der Sitzteilrahmen 3 nach vorne verschoben ist, dargestellt durch den entsprechenden Pfeil. Durch die Verbindung des Rückenlehnenrahmens, des Sitzteilrahmens 3 und des Verbindungsrahmens 4 werden gemäß der Verlagerung des Sitzteilrahmens 3 nach vorne entsprechend der Rückenlehnenrahmen 2 nach unten bewegt, ebenso dargestellt durch den entsprechenden Pfeil, und der Verbindungsrahmen 4 im Bereich der zweiten Drehachse 6 mit dem Sitzteilrahmen 3 nach vorne und dem Bereich der ersten Drehachse 5 mit dem Rückenlehnrahmen 2 nach unten bewegt.

Wie entsprechend der Figur 1b gut zu erkennen ist, ist durch die Verlagerung des Sitzteilrahmens 3 nach vorne einerseits die Sitztiefe eingestellt worden sowie ebenfalls durch die Zwangsführung des Verbindungsrahmens 4 wurde ebenso die Lendenstütze des Fahrzeugsitzes eingestellt.

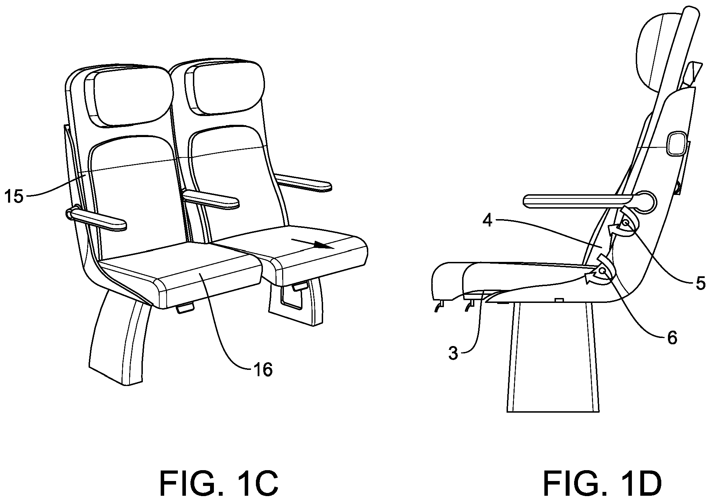

In der Figur 1c ist der Fahrzeugsitz gemäß den Figuren 1a beziehungsweise 1b nochmals dargestellt, wobei ein erstes Polsterelement 15 und ein zweites Polsterelement 16 zu erkennen sind, wobei das erste Polsterelement 15 mit dem Rückenlehnenrahmen 2 und dem Verbindungsrahmen 4 verbunden ist. Das zweite Polsterelement 16 ist mit dem Sitzteilrahmen 3 verbunden. Insbesondere sind die Polsterelemente 15, 16 unabhängig voneinander, das heißt, dass keinerlei wirktechnische Verbindung zwischen den beiden Polsterelementen 15, 16 vorliegt. Jedoch können sich die Polsterelement 15, 16 berühren, sind jedoch in der Bewegung und in der Ausfertigung voneinander unabhängig.

In der Figur 1d ist der Fahrzeugsitz 1 in einer Seitendarstellung dargestellt, wobei einerseits die Grundstellung G und andererseits die verlagerte Stellung V dargestellt sind. Durch einen Vergleich der beiden Stellungen G, V ist einerseits gut zu erkennen, wie die Sitztiefe des Sitzteils 3 beziehungsweise Sitzteilrahmens 3 und andererseits die Lendenstütze mittels des Verbindungsrahmens 4 eingestellt worden sind.

Ebenso ist es der Fall, dass die erste Drehachse 5 immer oberhalb der zweiten Drehachse 6 angeordnet ist. Dabei sind die Drehachsen 5, 6 derart angeordnet, dass der Bereich zwischen den Drehachsen 5, 6 dem Lendenbereich einer Person entspricht. Gleiches gilt ebenso für den Verbindungsrahmen 4.

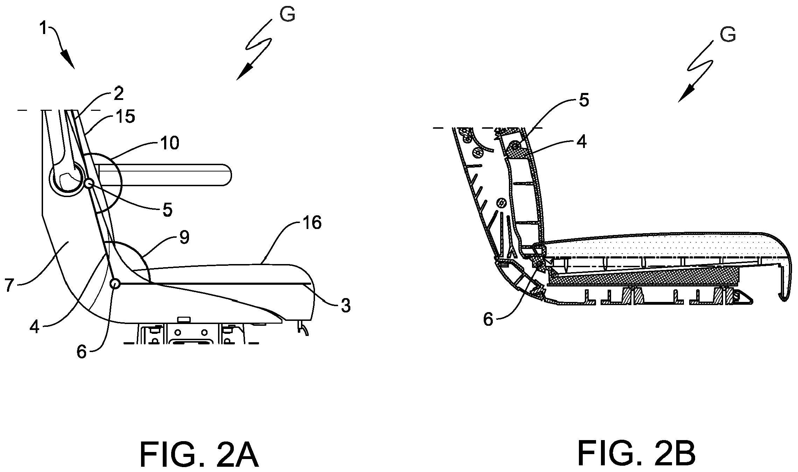

In den nachfolgenden Figuren 2a bis 7b werden verschiedene Stellungen des Fahrzeugsitzes gezeigt.

Die jeweiligen Figuren 2a bis 7b sind entweder in einer Seitendarstellung oder in einer Schnittdarstellung dargestellt.

Die Figur 2a zeigt den Fahrzeugsitz 1 in seiner Grundstellung, das heißt, dass der Sitzteilrahmen 3 bzw. das Sitzteil in seiner hintersten Stellung angeordnet ist. Der Sitzteilrahmen 3 und der Rückenlehnenrahmen 2 sind dabei ausschließlich translatorisch gegenüber dem Tragelement 7 verlagerbar. Das heißt insbesondere, dass der Rückenlehenrahmen 2 und der Sitzteilrahmen in ihre Erstreckungsrichtung bewegt werden können.

Weiter ist es vorgesehen, dass zwischen dem Rückenlehnrahmen 2 und dem Sitzteilrahmen 3 ein fester und unveränderbarer Winkel 8 ausgebildet ist. Weiter ist zwischen dem Rückenlehnenrahmen 2 und dem Verbindungsrahmen 4 ein zweiter veränderbarer Winkel und zwischen den Verbindungsrahmen 4 und dem Sitzteilrahmen 3 ein erster veränderbarer Winkel ausgebildet. Diese veränderbaren Winkel 9, 10 verändern sich je nach Stellung des Sitzteilrahmens und dementsprechend des Rückenlehnenrahmens 2.

In der Figur 2b ist der Fahrzeugsitz gemäß der Figur 2a in einer Schnittdarstellung dargestellt.

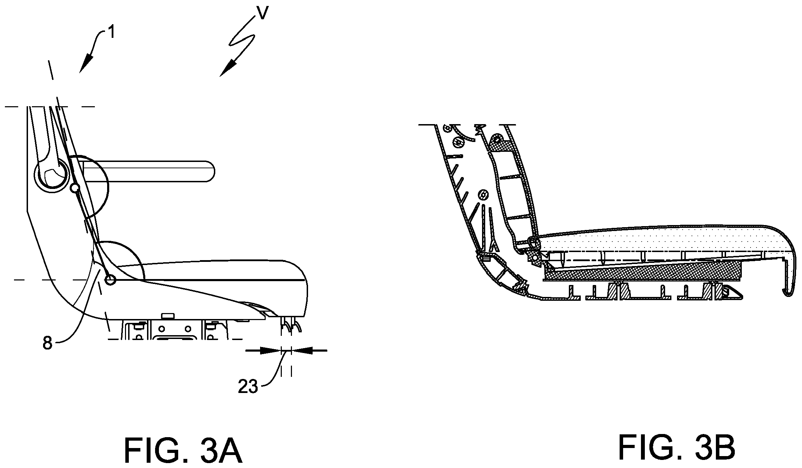

In der Figur 3a ist eine erste verlagerte Stellung des Fahrzeugsitzes 1 dargestellt, wobei der Sitzteilrahmen 3 nach vorne verschoben worden ist um eine erste Sitztiefe 23. Entsprechend der Verlagerung des Sitzteilrahmens 3 nach vorne um eben die Sitztiefe 23 wird der Verbindungsrahmen 4 entsprechend mitgezogen und dementsprechend wurde auch der Sitzrückenlehnenrahmen 2 entlang der Erstreckungsrichtung des Rahmens 2 nach unten bewegt. Wie weiter zu erkennen ist, haben sich die Größen der veränderbaren Winkel 9, 10 verändert.

Konkret verändern sich die Winkel 9, 10 derart, dass bei einer Verlagerung um eine Sitztiefe 23 nach vorne sich der erste veränderbare Winkel vergrößert und sich der zweite veränderbare Winkel sich verkleinert.

In der Figur 3b ist der Fahrzeugsitz gemäß der Figur 3a in einer Schnittdarstellung dargestellt.

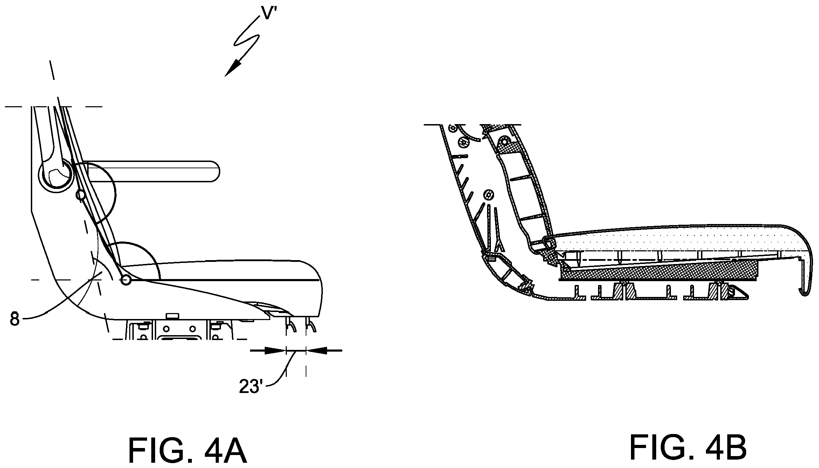

In der Figur 4a wird der Fahrzeugsitz 1 weiter in einer zweiten verlagerten Stellung V' dargestellt, wobei der Sitzteilrahmen 3 beziehungsweise das Sitzteil um eine Sitztiefe 23' nach vorne verlagert worden ist. Die veränderbaren Winkel 9, 10 haben sich weiter derart verändert, dass der erste veränderbare Winkel weiter angewachsen ist und der zweite veränderbare Winkel 10 weiter verkleinert ist.

In der Figur 4b ist der Fahrzeugsitz 1 gemäß der Figur 4a wieder in einer Schnittdarstellung dargestellt.

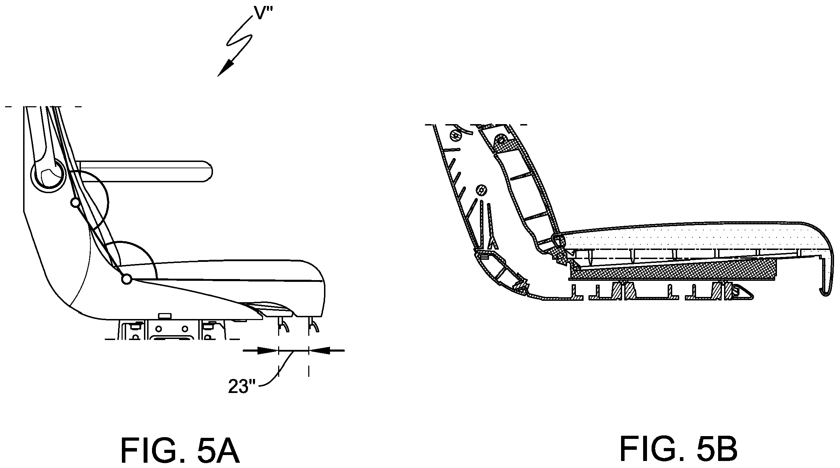

In der Figur 5a wird weiter die Situation in einer dritten verlagerten Stellung V" dargestellt, wobei der Sitzteilrahmen 3 beziehungsweise das Sitzteil um eine Sitztiefe 23" nach vorne verlagert ist. Der erste veränderbare Winkel 9 hat sich weiter vergrößert und der zweite veränderbare Winkel 10 weiter verkleinert.

In der Figur 5b wird der Fahrzeugsitz 1 gemäß der Figur 5a in einer Schnittdarstellung dargestellt.

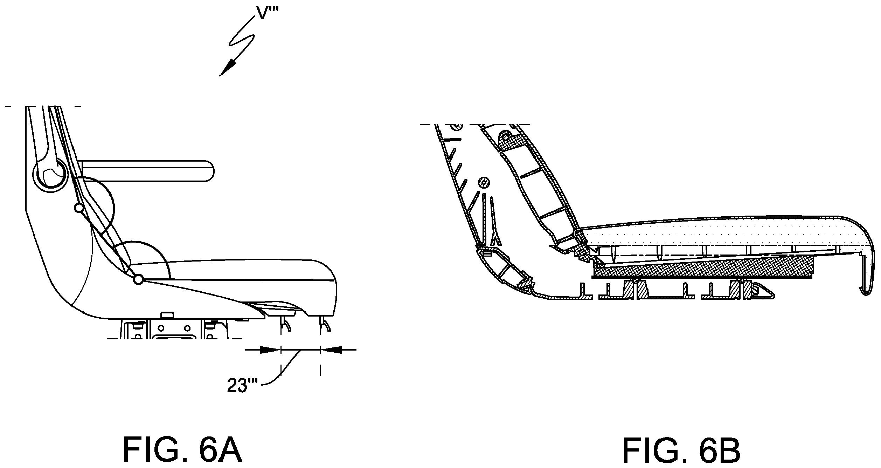

Gemäß der Figur 6a ist eine vierte verlagerte Stellung V‴ dargestellt, wobei der Sitzteilrahmen 3 beziehungsweise das Sitzteil um eine vierte Sitztiefe 23‴ nach vorne verlagert worden ist. Die Winkel 9, 10 verhalten sich entsprechend.

In der Figur 6b ist ein Querschnitt des Fahrzeugsitzes 1 gemäß der Figur 6a dargestellt.

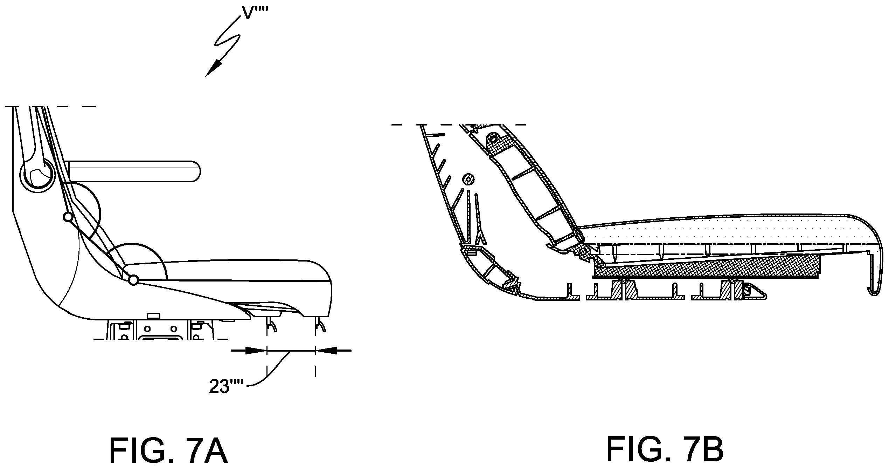

In der Figur 7a ist eine fünfte verlagerte Stellung Vʺʺ dargestellt, wobei das Sitzteil beziehungsweise das Sitzteilrahmen 3 um eine Sitztiefe 23ʺʺ nach vorne verlagert worden ist. Die fünfte verlagerte Stellung Vʺʺ entspricht dabei einer maximal verlagerten Stellung.

In der Figur 7b wird der Fahrzeugsitz 1 gemäß der Figur 7a in einem Querschnitt dargestellt.

Durch das nach vorne verlagern des Sitzteilrahmens 3 beziehungsweise des Sitzteils um eine Sitztiefe 23, 23', 23", 23‴, 23"" kann der Verbindungsrahmen 4 hinsichtlich seiner Positionierung gegenüber dem Rückenlehnenrahmen 2 und dem Sitzteilrahmen 3 eingestellt werden, wobei durch die veränderbaren Winkel 9, 10 die Lage des Verbindungsrahmens 4 im Raum veränderbar ist. Dementsprechend ändert sich auch, wie in den Figuren 2a bis 7b dargestellt, sich die Neigung des ersten Polsterelements 15, welches dem Verbindungsrahmen 4 beziehungsweise dem Rückenlehnenrahmen 2 zugeordnet ist. Hierdurch kann also die Lendenstütze des Fahrzeugsitzes 1 eingestellt werden.

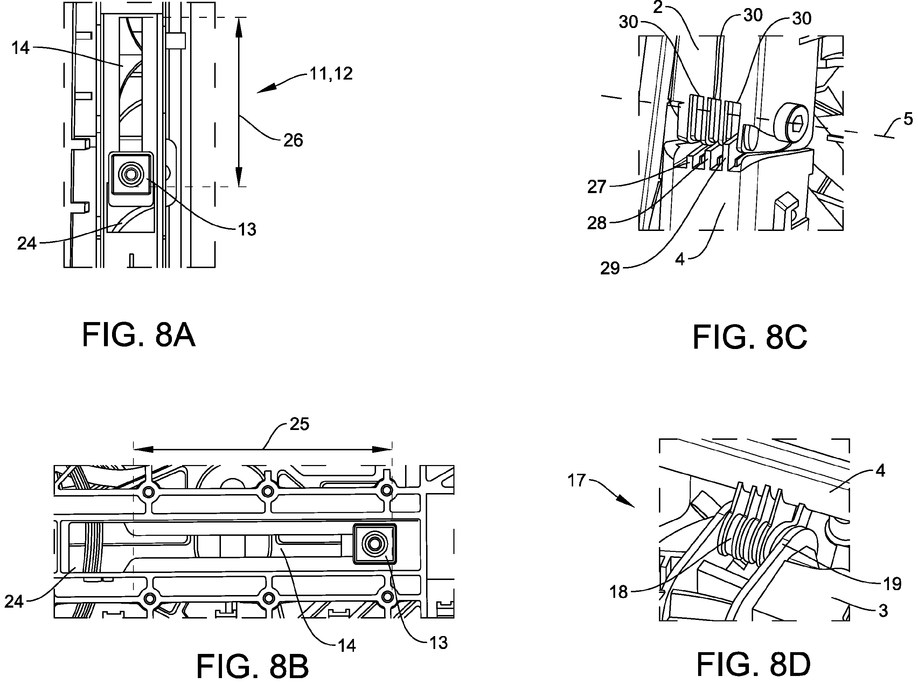

Gemäß der Figur 8a ist eine Führungseinrichtung 11 dargestellt, welche als eine Nutensteinführung 12 ausgebildet ist. Die Führungseinrichtung 11 der Figur 8a bezieht sich auf die Führung des Rückenlehnenrahmens 2 gegenüber dem Tragelement 7.

Die Nutensteinführung 12 umfasst zumindest ein Nutensteinelement 13 und eine Nut 14, wobei die Nut dazu ausgebildet und vorgesehen ist, dass das Nutensteinelement 13 darin geführt ist.

Weiter bevorzugt ist das Nutensteinelement 13 mit dem Tragelement 7 verbunden, insbesondere mit dem Rückenlehnenabschnitt 20 des Tragelements 7.

Weiter weist die Nut 14 einen Montageabschnitt 24 auf, welcher derart ausgebildet und vorgesehen ist, dass das Nutensteinelement 13 in die Nut 14 eingebracht werden kann.

In der Figur 8b ist eine Führungseinrichtung 11 hinsichtlich des Sitzteilrahmens 3 dargestellt, wobei die Führungseinrichtung 11 ebenfalls aus einer Nutensteinführung 12 ausgebildet ist. Die Ausgestaltung der Nutensteinelemente 13 und der Nut 14 mit dem Montageabschnitt 24 ist entsprechend der Führungseinrichtung 11 beziehungsweise der Nutensteinführung 12 hinsichtlich des Rückenlehnrahmens 2 identisch.

Gemäß der Figur 8b ist weiter dargestellt, dass sich das Nutensteinelement 13 in der vordersten Stellung der Nut 14 befindet, das heißt, dass sich der Sitzteilrahmen 3 in der maximal verlagerten Stellung befindet. Die Verlagerung des Sitzteilrahmens 3 nach vorne kann hierdurch begrenzt sein.

Die Figur 8a zeigt dabei den Gegenpart der Nutensteinführung 12 hinsichtlich des Rückenlehnenrahmens 2, das heißt, dass der Nutenstein 13 ebenfalls gemäß der maximal verlagerten Stellung dargestellt ist. Dabei ist es vorgesehen, dass in der maximal verlagerten Stellung die Nutensteine der Führungseinrichtung 11 des Rückenlehenrahmens 2 sich nicht bis in den Montageabschnitt 24 bewegen können, so dass ein Herausfallen des Nutensteins aus der Nut 14 verhindert werden kann.

Gleiches gilt ebenso für die Nutensteine 13 in der Grundstellung G, das heißt, dass der Sitzteilrahmen 3 in seiner hintersten möglichen Position angeordnet ist. Dabei ist der Nutenstein 13 der Führungseinrichtung 11 des Rückenlehenrahmens 2 in seiner obersten Position dargestellt, wobei der Nutenstein 13 für die Führungseinrichtung 11 des Sitzteilrahmens 3 ebenfalls nicht bis in den Montageabschnitt 24 verlagert werden kann.

Hierdurch ist ein Sicherheitsmerkmal implementiert aufgrund der Längen der Nuten, welche sich hinsichtlich des Rückenlehenrahmens 2 zu dem Sitzteilrahmen 3 unterscheiden. Eine Länge 25 der Nut 14 hinsichtlich des Sitzteilrahmens 3 ist dabei größer als eine Länge 26 der Nut hinsichtlich des Rückenlehnenrahmens 2. Insbesondere sind die Längen 25, 26 der Nuten 14 derart ausgebildet, dass der oben beschriebene Effekt des Verhinderns des Herausfallens aus der Nut 14 möglich ist.

Gemäß der Figur 8c ist eine Verbindung zwischen dem Rückenlehnenrahmen 2 und dem Verbindungsrahmen 4 dargestellt.

Dabei weist der Verbindungsrahmen 4 ein erstes Stegelement 27, ein zweites Stegelement 28 und ein drittes Stegelement 29 auf, welche sich in entsprechend ausgebildete Aufnahmen 30 des Rückenlehenrahmens 2 hineinerstrecken. Dabei kann es bevorzugt vorgesehen sein, dass das erste Stegelement 27 eine kleinere Erstreckung aufweist als das zweite Stegelement 28, wobei weiter bevorzugt das zweite Stegelement 28 eine geringere Ausdehnung als das dritte Stegelement 29 aufweist. Durch das Vorsehen des Stegelemente 27, 28, 29, welche in die entsprechende Aufnahme 30 hineinragen, kann bei einer Drehbewegung des Verbindungsrahmens 4 hinsichtlich des Rückenlehnenrahmens 2 eine verbesserte Führung gewährleitet werden.

Gemäß der Figur 8d ist weiter eine Verbindung zwischen dem Sitzteilrahmen 3 und dem Verbindungsrahmen 4 dargestellt, wobei die Verbindung eine lösbare Verbindung 17 ist und ein Hülsenelement 18 sowie ein Wellenstück 19 aufweisen. Das Hülsenelement 18 ist dabei am Verbindungsrahmen 4 und das Wellenstück 19 an dem Sitzteilrahmen 3 angeordnet. Die lösbare Verbindung 17, mit dem Hülsenelement 18 und dem Wellenstück 19, ist eine Klippverbindung, wobei das Hülsenelement 18 einen Querschnitt eines Kreissektors aufweist und das Wellenstück zumindest teilweise komplementär zu dem Hülsenelement 18 ausgebildet ist und in das Hülsenelement 18 einbringbar ist.

Sämtliche in den Anmeldungsunterlagen offenbarten Merkmale werden als erfindungswesentlich beansprucht, sofern sie einzeln oder in Kombination gegenüber dem Stand der Technik neu sind.

Alle aufgeführten Merkmale können miteinander in beliebiger Weise kombiniert werden.

### Bezugszeichenliste

- 1: Fahrzeugsitz
- 2: Rückenlehnenrahmen
- 3: Sitzteilrahmen
- 4: Verbindungsrahmen
- 5: erste Drehachse
- 6: zweite Drehachse
- 7: Tragelement
- 8: fester Winkel
- 9: erster veränderbarer Winkel
- 10: zweiter veränderbarer Winkel
- 11: Führungseinrichtung
- 12: Nutensteinführung
- 13: Nutensteinelement
- 14: Nut
- 15: erstes Polsterelement
- 16: zweites Polsterelement
- 17: lösbare Verbindung
- 18: Hülsenelement
- 19: Wellenstück
- 20: Rückenlehnenabschnitt
- 21: Sitzteilabschnitt
- 22: Armlehne
- 23, 23', 23", 23‴, 23"": Sitztiefe
- 24: Montageabschnitt
- 25: Länge
- 26: Länge
- 27: erstes Stegelement
- 28: zweites Stegelement
- 29: drittes Stegelement
- 30: Aufnahme
- G: Grundstellung
- V, V', V", V‴, Vʺʺ: verlagerte Stellung
- K: Kabine

## Patentansprüche

1. Fahrzeugsitz (1) zur gleichzeitigen Einstellung einer Sitztiefe (23, 23', 23", 23‴, 23"") und einer Lendenstütze des Fahrzeugsitzes (1),
**dadurch gekennzeichnet, dass**
der Fahrzeugsitz (1) einen Rückenlehnenrahmen (2), einen Sitzteilrahmen (3) und einen Verbindungsrahmen (4) umfasst, wobei der Verbindungsrahmen (4) drehbar um eine erste Drehachse (5) mit dem Rückenlehnenrahmen (2) und drehbar um eine zweite Drehachse (6) mit dem Sitzteilrahmen (3) verbunden ist und den Sitzteilrahmen (3) mit dem Rückenlehnenrahmen (2) verbindet, wobei der Sitzteilrahmen (3) und der Rückenlehnenrahmen (2) mit einem Tragelement (7) derart verbunden sind, dass der Sitzteilrahmen (3) und der Rückenlehnenrahmen (2) simultan relativ zu dem Tragelement (7) verlagerbar sind.

2. Fahrzeugsitz (1) nach Anspruch 1,
**dadurch gekennzeichnet, dass**
der Sitzteilrahmen (3) und der Rückenlehnenrahmen (2) einen festen und unveränderbaren Winkel (8) zueinander einschließen.

3. Fahrzeugsitz (1) nach Anspruch 1 oder 2,
**dadurch gekennzeichnet, dass**
zwischen dem Sitzteilrahmen (3) und dem Verbindungsrahmen (4) ein erster veränderlicher Winkel (9) und zwischen dem Rückenlehnenrahmen (2) und dem Verbindungsrahmen (4) ein zweiter veränderlicher Winkel (10) vorgesehen ist, wobei die Größe der veränderlichen Winkel (9, 10) sich bei Verlagerung des Sitzteilrahmens (3) verändern, wodurch die Lendenstütze veränderlich ist.

4. Fahrzeugsitz (1) nach einem der Ansprüche 1 bis 3,
**dadurch gekennzeichnet, dass**
der Rückenlehnenrahmen (2) und der Sitzteilrahmen (3) jeweils ausschließlich translatorisch verlagerbar sind.

5. Fahrzeugsitz (1) nach Anspruch 4,
**dadurch gekennzeichnet, dass**
der Rückenlehnenrahmen (2) und der Sitzteilrahmen (3) mittels Führungseinrichtungen (11) translatorisch verlagerbar sind, wobei bevorzugt die Führungseinrichtungen (11) zumindest eine Nutensteinführung (12) sein kann.

6. Fahrzeugsitz (1) nach einem der Ansprüche 1 bis 5,
**dadurch gekennzeichnet, dass**
der Rückenlehnenrahmen (2) und der Verbindungsrahmen (4) mit einem ersten Polsterelement (15) und der Sitzteilrahmen (3) mit einem zweiten Polsterelement (16) verbunden sind, wobei bevorzugt das erste Polsterelement (15) unabhängig von dem zweiten Polsterelement (16) ist.

7. Fahrzeugsitz (1) nach einem der Ansprüche 1 bis 6,
**dadurch gekennzeichnet, dass**
zwischen dem Sitzteilrahmen (3) und dem Verbindungsrahmen (4) eine lösbare Verbindung (17) besteht, wobei die lösbare Verbindung (17) bevorzugt eine Clip-Verbindung ist.

8. Fahrzeugsitz (1) nach Anspruch 7,
**dadurch gekennzeichnet, dass**
die lösbare Verbindung (17) ein Hülsenelement (18), welches in einem Querschnitt einen Kreissektor aufweist mit einen Mittelpunktswinkel von mehr als 180° und höchstens 300°, und ein zumindest teilweise komplementär zu dem Hülsenelement (18) ausgebildetes und in das Hülsenelement (18) einbringbares Wellenstück (19) umfasst.

## Geänderte Patentansprüche

### Geänderte Patentansprüche gemäss Regel 137(2) EPÜ.

1. Fahrzeugsitz (1) zur gleichzeitigen Einstellung einer Sitztiefe (23, 23', 23", 23‴, 23ʺʺ) und einer Lendenstütze des Fahrzeugsitzes (1),
wobei
der Fahrzeugsitz (1) einen Rückenlehnenrahmen (2), einen Sitzteilrahmen (3) und einen Verbindungsrahmen (4) umfasst, wobei der Verbindungsrahmen (4) drehbar um eine erste Drehachse (5) mit dem Rückenlehnenrahmen (2) und drehbar um eine zweite Drehachse (6) mit dem Sitzteilrahmen (3) verbunden ist und den Sitzteilrahmen (3) mit dem Rückenlehnenrahmen (2) verbindet, wobei der Sitzteilrahmen (3) und der Rückenlehnenrahmen (2) mit einem Tragelement (7) derart verbunden sind, dass der Sitzteilrahmen (3) und der Rückenlehnenrahmen (2) simultan relativ zu dem Tragelement (7) verlagerbar sind,
**dadurch gekennzeichnet, dass**
das Trageelement (7) als starre Sitzschale ausgebildet ist und dass der Rückenlehnenrahmen (2) und der Sitzteilrahmen (3) jeweils ausschließlich translatorisch gegenüber dem Trageelement (7) verlagerbar sind.

2. Fahrzeugsitz (1) nach Anspruch 1,
**dadurch gekennzeichnet, dass**
der Sitzteilrahmen (3) und der Rückenlehnenrahmen (2) einen festen und unveränderbaren Winkel (8) zueinander einschließen.

3. Fahrzeugsitz (1) nach Anspruch 1 oder 2,
**dadurch gekennzeichnet, dass**
zwischen dem Sitzteilrahmen (3) und dem Verbindungsrahmen (4) ein erster veränderlicher Winkel (9) und zwischen dem Rückenlehnenrahmen (2) und dem Verbindungsrahmen (4) ein zweiter veränderlicher Winkel (10) vorgesehen ist, wobei die Größe der veränderlichen Winkel (9, 10) sich bei Verlagerung des Sitzteilrahmens (3) verändern, wodurch die Lendenstütze veränderlich ist.

4. Fahrzeugsitz (1) nach einem der vorangegangenen Ansprüchen,
**dadurch gekennzeichnet, dass**
der Rückenlehnenrahmen (2) und der Sitzteilrahmen (3) mittels Führungseinrichtungen (11) translatorisch verlagerbar sind, wobei bevorzugt die Führungseinrichtungen (11) zumindest eine Nutensteinführung (12) sein kann.

5. Fahrzeugsitz (1) nach einem der Ansprüche 1 bis 4,
**dadurch gekennzeichnet, dass**
der Rückenlehnenrahmen (2) und der Verbindungsrahmen (4) mit einem ersten Polsterelement (15) und der Sitzteilrahmen (3) mit einem zweiten Polsterelement (16) verbunden sind, wobei bevorzugt das erste Polsterelement (15) unabhängig von dem zweiten Polsterelement (16) ist.

6. Fahrzeugsitz (1) nach einem der Ansprüche 1 bis 5,
**dadurch gekennzeichnet, dass**
zwischen dem Sitzteilrahmen (3) und dem Verbindungsrahmen (4) eine lösbare Verbindung (17) besteht, wobei die lösbare Verbindung (17) bevorzugt eine Clip-Verbindung ist.

7. Fahrzeugsitz (1) nach Anspruch 6,
**dadurch gekennzeichnet, dass**
die lösbare Verbindung (17) ein Hülsenelement (18), welches in einem Querschnitt einen Kreissektor aufweist mit einen Mittelpunktswinkel von mehr als 180° und höchstens 300°, und ein zumindest teilweise komplementär zu dem Hülsenelement (18) ausgebildetes und in das Hülsenelement (18) einbringbares Wellenstück (19) umfasst.
